(19) Europäisches Patentamt

European Patent Office

Office européen des brevets

(11) **EP 1 131 026 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(21) Anmeldenummer: **99948781.2**

(22) Anmeldetag: **17.09.1999**

(51) Int Cl.$^7$: **A61F 13/15**, B29C 51/10

(86) Internationale Anmeldenummer:
**PCT/EP1999/006906**

(87) Internationale Veröffentlichungsnummer:
**WO 2000/016726 (30.03.2000 Gazette 2000/13)**

(54) **PERFORIERTER FILM MIT SCHRÄG-WINKELIGEN KAPILLAREN**

PERFORATED FILM WITH CAPILLARIES DISPOSED AT A SLANTED ANGLE

FILM PERFORE DOTE DE CAPILLAIRES OBLIQUES

(84) Benannte Vertragsstaaten:
**DE GB IT NL**

(30) Priorität: **18.09.1998 DE 19842956**

(43) Veröffentlichungstag der Anmeldung:
**12.09.2001 Patentblatt 2001/37**

(73) Patentinhaber: **RKW AG Rheinische Kunststoffwerke**
**67547 Worms (DE)**

(72) Erfinder:
• **ROSE, Dieter**
**D-82031 Grünwald (DE)**
• **STURM, Valentin**
**D-81379 München (DE)**
• **WALLER, Paul**
**D-83026 Rosenheim (DE)**

(74) Vertreter: **Patentanwälte Zellentin & Partner**
**Rubensstrasse 30**
**67061 Ludwigshafen (DE)**

(56) Entgegenhaltungen:
**EP-A- 0 934 736          WO-A-97/03795**

**Beschreibung**

Die vorliegende Erfindung betrifft einen perforierten Film aus Polymermaterial, wobei die Perforationen als Kapillaren ausgebildet sind, die sich aus der Oberfläche des Films heraus nicht-vertikal erstrecken, sowie ein Verfahren zur Herstellung dieses Films. Derartige Filme finden insbesondere Verwendung im Hygiene- und Medizinbereich, zum Beispiel in der Damenhygiene.

Vorzugsweise werden Hygienefolien aus Polyolefinen hergestellt und besitzen ein Flächengewicht im Bereich von 5-70 g/m$^2$.

An Folien für Hygieneprodukte werden je nach Anwendungsbereich spezielle Anforderungen gestellt. Die nachfolgend beschriebenen Folien sollen einerseits gasdurchlässig und hydrophob sein und andererseits bei Druckbelastung keine Flüssigkeit durchtreten lassen.

Aus WO-A-9 703 818 ist ein perforierter Film aus thermoplastischem Polymermaterial bekannt, bei dem die Perforationen als Kapillaren ausgebildet sind, die schräg unter einem Winkel von 5 bis 60° bezüglich einer zur Oberfläche des Films senkrechten Ebene angeordnet sind. Die Wände der Kapillaren sind stufig, gerippt oder gewellt. Weiterhin offenbart die WO-A-9 703 795 ein Verfahren zur Herstellung des in WO-A-9 703 818 offenbarten perforierten Films mittels einer Unterdruck-Perforierungseinheit, bei der ein Lochblech verwendet wird, das aus mehreren, übereinander liegenden, perforierten Einzelblechen gebildet wird, die so angeordnet sind, daß sich gerippte, schräg verlaufende Bohrungen unter einem Winkel von 5 bis 60° ergeben. Die Nachteile der in diesen WO-Schriften beschriebenen Filme und Lochbleche werden darin gesehen, daß zum einen die Perforationen in dem Film aufgrund ihrer Rippen oder Stufen bei Druckbelastung stauchen können, so daß Flüssigkeit durchgehen kann, und zum anderen die Lochbleche schwierig und aufwendig aus den Einzelblechen paßgenau herzustellen sind.

Der Erfindung lag daher die Aufgabe zugrunde, die bekannten Filme und Verfahren zu deren Herstellung dahingehend weiterzubilden, daß perforierte Filme erhalten werden, bei denen die obengenannten Nachteile nicht oder nur in erheblich verringertem Umfang auftreten.

Zur Lösung dieser Aufgabe wird ein perforierter Film mit als Kapillaren ausgebildeten Perforationen vorgeschlagen, die sich nicht-vertikal (schräg) aus der Oberfläche des Films heraus erstrecken, jedoch im Gegensatz zu den bekannten gerippten oder stufigen Wänden eben (glatt) verlaufende Wände aufweisen. Zur Herstellung dieses Films wird eine Unterdruck-Perforierungsvorrichtung verwendet, die einen Zylinder oder ein Band mit schräg verlaufenden Bohrungen mit ebenem Oberflächenprofil aufweist.

Somit betrifft die Erfindung einen perforierten Film aus Polymermaterial, wobei die Perforationen als Kapillaren ausgebildet sind, die sich aus einer Oberfläche des Films heraus nicht-vertikal erstrecken, der dadurch gekennzeichnet ist, daß die Kapillaren ebene Wände aufweisen. Darüberhinaus betrifft die Erfindung ein Verfahren zur Herstellung dieses Films, in welchem ein Ausgangsfilm im schmelzflüssigen Zustand einer Unterdruck-Perforierungsvorrichtung zugeführt wird, die eine Unterdruckvorrichtung und einen Zylinder oder ein Band mit schräg verlaufenden Bohrungen, die ein ebenes Oberflächenprofil aufweisen, aufweist, wodurch die Polymerschmelze in Richtung des Unterdrucks in die Bohrungen gesaugt wird und die Kapillaren unter Erkaltung des Films ausbildet. Bevorzugte Ausführungsformen der Erfindung sind in der nachfolgenden Beschreibung, den Figuren, dem Beispiel und den Unteransprüchen beschrieben.

Bei den Figuren zeigen:

Figur 1     in schematischer Darstellung einen bevorzugten erfindungsgemäßen Film;

Figur 2     in schematischer Darstellung ein bevorzugtes Verfahren zur Herstellung des perforierten Films gemäß der Erfindung;

Figur 3     in schematischer Darstellung den Zusammenhang Kapillarabmessungen bei einer runden Öffnung der Kapillaren zum Winkel β, unter dem die Kapillaren zur Vertikalen zur Oberfläche des Films angeordnet sind;

Figur 4     eine REM-Aufnahme eines bevorzugten erfindungsgemäßen Films bei Draufsicht auf die Oberfläche des Films, der die Kapillaren abgewandt sind;

Figur 5     eine REM-Aufnahme eines bevorzugten erfindungsgemäßen Films bei Draufsicht auf die Oberfläche des Films, der die Kapillaren zugewandt sind;

Figur 6     eine REM-Aufnahme eines bevorzugten erfindungsgemäßen Films bei Draufsicht auf die Öffnungen der Kapillaren auf dem der Filmoberfläche abgewandten Ende (Ausgangsöffnungen der Kapillaren);

Figur 7     eine REM-Aufnahme eines Schnitts durch einen bevorzugten erfindungsgemäßen Film; und

Figur 8    eine Vergrößerung von Figur 7.

Der erfindungsgemäße perforierte Film weist Perforationen auf, die als sich aus einer Oberfläche des Films heraus erstreckende nicht-vertikale, schräg-winkelige oder schräg verlaufende Kapillaren oder schlauchähnliche Gebilde ausgebildet sind.

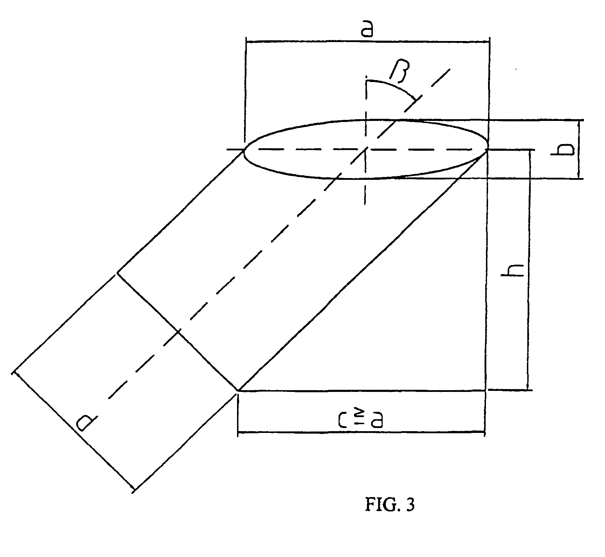

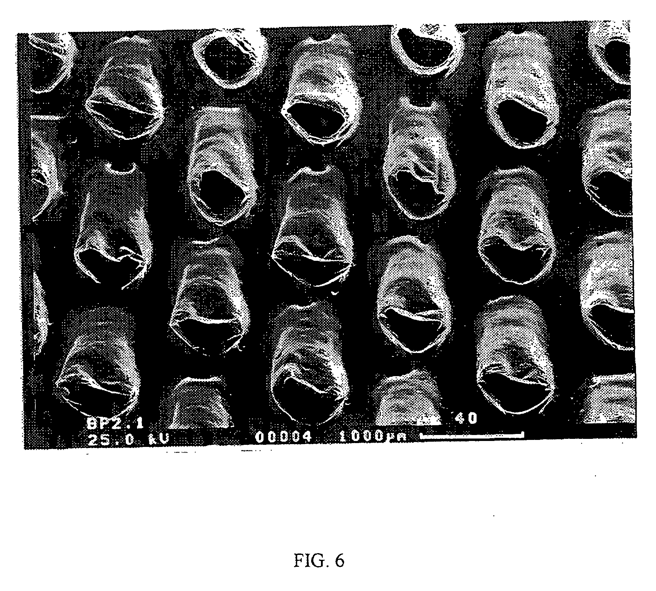

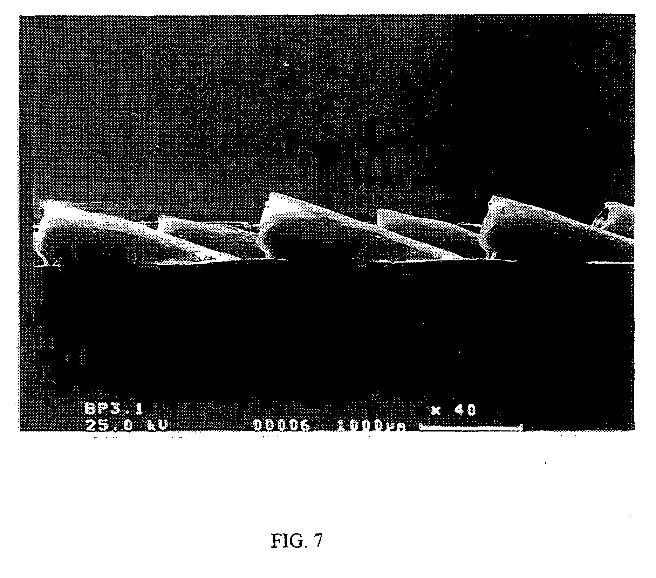

Diese Kapillaren oder schlauchähnlichen Gebilde sind hohl und weisen jeweils einen Durchgang auf, der sich von den Öffnungen der Kapillaren im Film, das heißt, den Öffnungen der Kapillaren auf dem der Filmoberfläche zugewandten Ende (Eingangsende der Kapillaren), bis zu den Öffnungen der Kapillaren auf dem der Filmoberfläche abgewandten Ende (Ausgangsende der Kapillaren) erstreckt. Vorliegend wird das der Filmoberfläche zugewandte Kapillarende als Eingangsöffnung der Kapillare und das der Filmoberfläche abgewandte Kapillarende als Ausgangsöffnung der Kapillare bezeichnet. Erfindungsgemäß verlaufen die Innen- und Außenwände der Kapillaren oder schlauchähnlichen Gebilde eben, d. h. die Wände sind glatt, verlaufen monoton oder gleichmäßig und haben, anders als die nicht-ebenen Wände von WO-A-9 703 818, keine Rippen, Stufen oder Wellen. Solche nicht-ebenen Wände, d.h. Wände mit Rippen, Stufen oder Wellen, sind in Fig. 6 oder 7 von WO-A-9 703 818 zu sehen. Der Winkel, unter dem erfindungsgemäß die Kapillaren zur Oberfläche des Films angeordnet sind, ist vom Anwendungbereich abhängig. Vorzugsweise erstrecken sich die Kapillaren unter einem Neigungswinkel von 15 bis 80°, insbesondere von 30 bis 70°, zur Vertikalen zur Oberfläche des Films, d.h. bezüglich einer Ebene, die senkrecht zur Oberfläche des Films verläuft. Dieser Neigungswinkel ist in Figur 3 als der Winkel β dargestellt.

In einer bevorzugten Ausgestaltung der Erfindung weisen die Kapillaren eine Mindestlänge auf, bei der bei Draufsicht auf die Oberfläche des Films (d.h. bei Betrachtung von der Ebene aus, die senkrecht zur Oberfläche des Films verläuft), kein Durchblick (d.h. kein offener Durchblick) durch den Film möglich ist. In Abhängigkeit vom Neigungswinkel der Kapillaren zur Oberfläche des Films ergibt sich somit eine bestimmte Mindestlänge, die vom Fachmann leicht bestimmt werden kann. Beispielsweise beträgt für Kapillaren mit parallel verlaufenden Wänden, die unter einem Winkel von 60° zur Vertikalen zur Filmoberfläche angeordnet sind, und mit einem Eingangsöffnungsdurchmesser b der Kapillaren (vgl. Fig. 3) von 0,7 mm eine Mindestlänge $c \geq a = 1,4$ mm (vgl. Fig. 3). In der unten näher beschriebenen Figur 3 wird schematisch die Abhängigkeit der Länge der Kapillaren vom Winkel β, unter dem die Kapillaren zur Vertikalen zur Oberfläche des Films angeordnet sind, dargestellt.

Die Form der Öffnungen der Kapillaren unterliegt an sich keiner Beschränkung. Vorzugsweise sind die Öffnungen auf dem der Filmoberfläche zugewandten und/oder abgewandten Ende (d.h. die Eingangs- und/oder Ausgangsöffnungen der Kapillaren) von runder oder ovaler Form. Die Wände der Kapillaren können parallel zueinander verlaufen, d. h. der mittlere Durchmesser der Kapillaren ist an jeder Stelle der Kapillaren gleich. Die Wände der Kapillaren können aber auch ausgehend von den Eingangsöffnungen der Kapillaren in Richtung auf die Ausgangsöffnungen der Kapillaren konisch zulaufen, so daß der mittlere Durchmesser der Eingangsöffnungen größer ist als der der Ausgangsöffnungen. Bei einer runden Form beträgt der Durchmesser der Eingangsöffnungen der Kapillaren vorzugsweise 0,4 bis 1,0 mm, insbesondere 0,5 bis 0,8 mm, und der Durchmesser der Ausgangsöffnungen der Kapillaren vorzugsweise 0,1 bis 1 mm, insbesondere 0,2 bis 0,7 mm. Beispielsweise können die Ausgangsöffnungen der Kapillaren rund sein und einen mittleren Durchmesser von 0,1 bis 1 mm haben.

Die Kapillaren können unter jedem Richtungswinkel, d.h. unter einem Winkel von 0 bis 360°, bezogen auf die Maschinenrichtung bei der Herstellung des Films, angeordnet sein. Vorzugsweise verläuft der Richtungswinkel in Maschinenrichtung.

Als Polymermaterial für die Herstellung des erfindungsgemäßen Films sind zu schmelzbaren Polymerfilmen verarbeitbare Polymermaterialien geeignet, wobei der Fachmann aus allen bekannten Materialien mit dieser Eigenschaft leicht die geeigneten herausfinden kann. Erfindungsgemäß bevorzugte Polymerfilme bestehen aus Thermoplasten, thermoplastischen Elastomeren, Synthesekautschuk enthaltenden Copolymeren, beispielsweise ein Styrol-Butadien-Styrol- oder ein Acryl-Butadien-Styrol-Copolymerisat, insbesondere Ethylen-Vinylacetat-Copolymer, einem Polybutylenterephthalat, Polyethylenterephthalat oder seinen Copolymeren, Polyurethanen oder aus deren Gemischen, vorzugsweise jedoch aus Polyolefinen oder Polyolefin-Copolymeren, insbesondere aus Polyethylen, Polyethylen-Copolymer, Polypropylen oder Polypropylen-Copolymer, wobei Mischungen aus Polyethylen und Polyethylen-Copolymeren (LDPE (Low Density Polyethylene), MDPE (Medium Density Polyethylene) und LLDPE (Linear Low Density Polyethylene)) bevorzugt sind. Insbesondere handelt es sich bei dem Polymermaterial um LDPE, MDPE, LLDPE, Polypropylen oder ein Gemisch davon. Für den Polymerfilm können gleichfalls biologisch abbaubare Stoffe, beispielsweise auf Cellulosebasis, Poly-ε-Caprolacton oder dergleichen verwendet werden.

Überlicherweise werden die erfindungsgemäßen Gebilde gemäß ihrem Einsatzzweck in der Regel weiß mit Titandioxid eingefärbt. Weiterhin können die erfindungsgemäßen Polymerfilme die dem Fachmann bekannten Zusatzstoffe und/oder Verarbeitungshilfsmittel enthalten.

In einer besonders bevorzugten Ausführungsform der Erfindung enthält das Polymermaterial in Abhängigkeit von den Anforderungen des Anwendungsbereichs zusätzlich ein oberflächenaktives oder hydrophobes Additiv, d.h. ein Hydrophobiermittel. Hierfür eignen sich alle dem Fachmann auf dem Gebiet der Polymerfilme bekannten hydrophoben Additive. Beispielsweise werden Silikone, insbesondere Polysiloxane oder Polysilane, eingesetzt. Überraschenderweise wurde festgestellt, daß durch den Zusatz eines hydrophoben Additivs die Kapillaren bei gleichem Polymermaterial gleichmäßiger und länger gezogen werden können.

Die Schichtdicke des perforierten Films ist abhängig vom Öffnungsdurchmesser d der Kapillaren (vgl. Fig. 3), vom Neigungswinkel β, der Rezeptur der Ausziehmasse des Ausgangsfilms und der Blechdicke des Zylinders oder des Bandes. Vorzugsweise liegt die Gesamtdicke im Bereich von 0,45 bis 1,2 mm. Das Flächengewicht des perforierten Films liegt vorzugsweise im Bereich von 10 bis 60 $g/m^2$, insbesondere von 15 bis 40 $g/m^2$.

Die Anzahl der Perforationen ist abhängig einerseits von der geforderten Gasdurchlässigkeitsmenge und andererseits von den gewählten geometrischen Abmessungen der Kapillaren. Vorteilhafterweise sollte die offene Fläche des Films 4 bis 35 %, vorzugsweise 10 bis 25 %, bezogen auf die Gesamtoberfläche (d.h. offene und geschlossene Oberfläche) des Films, betragen.

In einer bevorzugten Ausführungsform der Erfindung besteht der Polymerfilm aus einer einzigen Schicht. Er kann aber auch aus zwei oder mehreren koextrudierten Schichten bestehen.

Der erfindungsgemäße Film ist sehr gut luft- und wasserdampfdurchlässig. Die Luftund Wasserdampfdurchlässigkeit hängt ab von der Größe sowie der Anzahl der Löcher und von dem Neigungswinkel der Kapillaren zur Oberfläche des Films. So beträgt beispielsweise die Wasserdampfdurchlässigkeit bei Messung gemäß einer DIN 53122 angelehnten, unten näher beschriebenen Methode 1000 bis 10000 $g/m^2 \cdot 24h$, insbesondere 4000 bis 8000 $g/m^2 \cdot 24h$. Zur Bestimmung der Wasserdampfdurchlässigkeit wird ein Prüfbecher mit 8,5 g Silicagel gefüllt, mit der zu prüfenden Folie abgedeckt und mit einem Ring an den Rändern dicht verschlossen. Der so präparierte Becher wird gewogen (M [0 h]), im Klimaschrank bei 75 % relativer Luftfeuchte und 40°C für 4 Stunden temperiert und zurückgewogen (M[4 h]). Die Berechnung der Wasserdampfdurchlässigkeit erfolgt nach der Formel:

$$\text{Wasserdampfdurchlässigkeit } [g/m^2 \cdot 24h] = (M[4\,h] - M[0\,h]) \cdot 24/4 \cdot 0{,}0007065$$

Zur Durchführung des erfindungsgemäßen Verfahrens dient eine Unterdruck-Perforierungsvorrichtung mit einem vorgeschalteten Extruder, ausgestattet mit einer Breitschlitzdüse, sowie mit einem perforierten Zylinder oder Band mit Kühleinrichtungen. Die Breitschlitzdüse ist in Abstand und Auflaufwinkel zum perforierten Zylinder oder Band verstellbar. Aus der Düse tritt das Polymermaterial in schmelzflüssigem Zustand aus und wird in diesem Zustand auf die Unterdruck-Perforierungseinheit aufgebracht. Zusätzlich kann zur Unterstützung der Erwärmung der dem perforierten Zylinder oder Band zugeführten Ausgangsfolienbahn Strahlungswärme eingesetzt werden.

Bekanntlich besitzen Polymere keinen scharf definierten Schmelzpunkt sondern einen Schmelzbereich, wobei sich jedoch kristallinen Bereichen des Polymermaterials jeweils ein Kristallitschmelzpunkt zuordnen läßt. Dieser Kristallitschmelzpunkt liegt stets höher als der Schmelzpunkt (Schmelzbereich) der nicht kristallinen Bestandteile. In jedem Fall ist der schmelzflüssige Zustand dadurch beschrieben, daß der Schubmodul gegen Null geht und - im Falle von Polymeren mit kristallinen Bereichen - letztere nicht mehr nachweisbar sind.

Der perforierte Zylinder oder das perforierte Band ist mit schräg verlaufenden Bohrungen versehen, die ein ebenes, d.h. glattes Oberflächenprofil (entsprechend zu den ebenen Kapillarwänden des erfindungsgemäßen Films), aufweisen. Derartige perforierte Zylinder oder Bänder können z.B. unter Anwendung eines Elektronenstrahls hergestellt werden. Hierbei wird die Zahl der pro Zeiteinheit zu bohrenden Löcher bei der Perforierung des Zylinders oder des Bandes in Abhängigkeit von dem Bohrungsdurchmesser, der Blechdicke, der Materialzusammensetzung, der Fokusierung und der Strahlleistung jeweils empirisch ermittelt, wobei die Bohrtoleranz etwa ± 0,05 mm beträgt und als Richtwert für den Mindestabstand von Lochmitte zu Lochmitte der doppelte Lochdurchmesser anzusetzen ist. Von einem CNC-System gesteuert vollzieht ein Elektronenstrahl-Impuls unter Vakuum die Bohrung. Der gebündelte, auf die Materialoberfläche auftreffende Elektronenstrahl schmilzt und verdampft das Material am Auftreffpunkt. Nachdem das Material durchbohrt ist, trifft der Elektronenstrahl auf ein spezielles Hilfsmaterial, das dem Material unterlegt ist. Dieses verdampft schlagartig und entwickelt hierbei einen hohen Dampfdruck. Dieser Dampfdruck schleudert das noch vorhandene flüssige Material aus den gebohrten Kapillaren, ohne daß eine Gratbildung auftritt. Die Vorteile des Elektronenstrahl-Bohrens liegen unter anderem in der hohen Geschwindigkeit gegenüber anderen Bohrverfahren sowie der genauen Reproduzierbarkeit, vor allem, wenn kleine Löcher in großer Zahl in einem Winkel zur Oberfläche unabhängig von der Härte des Materials zu bohren sind. Im Gegensatz zum Laserverfahren spielen Oberflächeneigenschaften nur eine untergeordnete Rolle, zudem ist nur ein Impuls je Loch erforderlich.

Vorzugsweise haben die perforierten Zylinder oder Bänder eine Dicke von 0,3 bis 2,0 mm, insbesondere von 0,5 bis 1 mm. Die Bohrungen verlaufen vorzugsweise unter einem Winkel von 15 bis 80°, insbesondere von 30 bis 70°, zur Vertikalen zur Zylinder- bzw. Bandoberfläche. Anzahl, Anordnung und Winkel der Kapillaren auf dem der Filmoberfläche zugewandten Ende sind durch den Zylinder festgelegt, während die Größe der Ausgangsöffnungen der Kapillaren durch den Unterdruck ebenso beeinflußt wird wie die Länge der Kapillaren. Gleichzeitig kann der Film durch eine Oberflächenstrukturierung des Zylinders oder Bandes zusätzlich mit einer Prägung versehen werden. Vorzugsweise wird ein Zylinder oder ein Band, unabhängig von seiner Wandstärke, aus einem einlagigen Blech verwendet.

Die erfindungsgemäßen perforierten Filme sind besonders gut zu verwenden im Hygiene- und Medizinbereich, z.b. bei Damenbinden, Windeln für Babies wie für Erwachsene, Betteinlagen, Operationsabdeckungen, Wäscheschutz oder dergleichen. Des weiteren eignen sie sich für Anwendungen als Flüssigkeitssperrschicht mit hohem Luft- bzw. Dampfdurchgang (z.B. Dachunterzugsbahnen, Schutzbekleidung, etc.).

Die Erfindung wird anhand der Figuren und des folgenden Beispiels, die bevorzugte Ausführungsformen der Erfindung darstellen, näher erläutert.

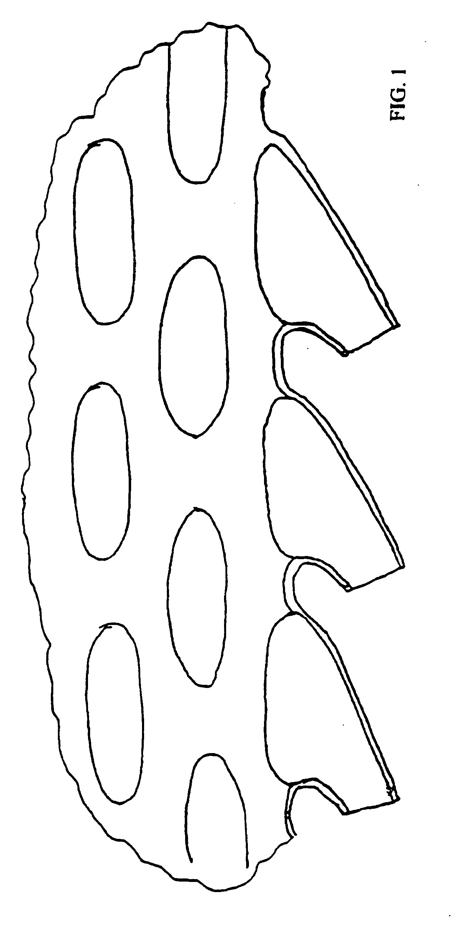

Figur 1 zeigt schematisch einen erfindungsgemäßen perforierten Film im Schnitt, wobei die Kapillaren ovale Öffnungen im Film haben und konisch zulaufen.

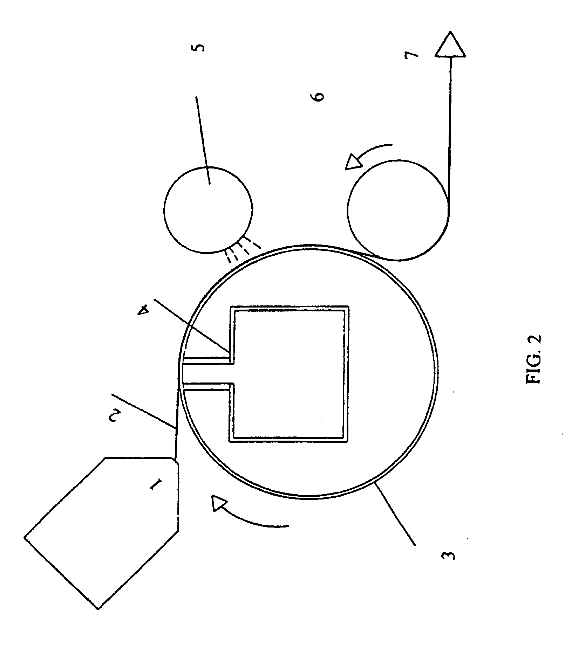

Figur 2 zeigt einen schematischen Aufbau einer Unterdruck-Perforierungsvorrichtung zur Durchführung eines bevorzugten erfindungsgemäßen Verfahrens. Gemäß Figur 2 wird ein aus dem Breitschlitzwerkzeug 1 kommender Polymerfilm 2 im schmelzflüssigen Zustand der Unterdruck-Perforierungsvorrichtung aus dem perforierten Zylinder 3 mit schrägen Bohrungen und der Unterdruck-Vorrichtung 4 zugeführt. Der Polymerfilm 2 wird über die Unterdruck-Vorrichtung 4 in den perforierten Zylinder 3 gesaugt, wodurch die Polymerschmelze die Kapillaren ausbildet. Nach Abkühlung des Films durch die Kühleinrichtung 5 wird über eine Abnahmewalze 6 der perforierte Film 7 abgenommen.

Figur 3 zeigt schematisch die Abhängigkeit der Länge von runden Kapillaren vom Neigungswinkel β, unter dem die Kapillaren zur Vertikalen zur Oberfläche des Films angeordnet sind. Hierbei bezeichnen: c die Länge der Kapillare, b den Eingangsöffnungsdurchmesser der Kapillare und a die Mindestlänge der Kapillare, damit bei Draufsicht auf die Oberfläche des Films ein Durchblick durch den Film nicht möglich ist. Die Mindestlänge a errechnet sich wie folgt:

$$b = d;$$

$$d/a = \cos \beta;$$

$$a = d/\cos \beta;$$

$$h_{min} = a/\tan \beta = d/(\cos \beta \times \tan \beta).$$

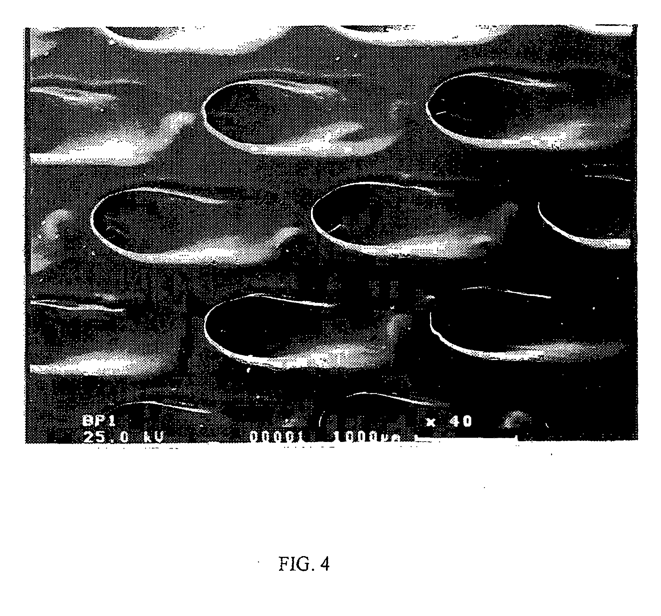

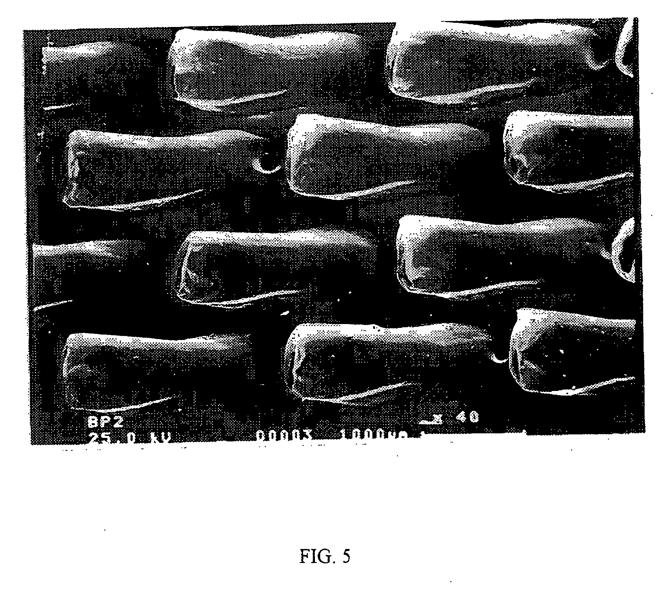

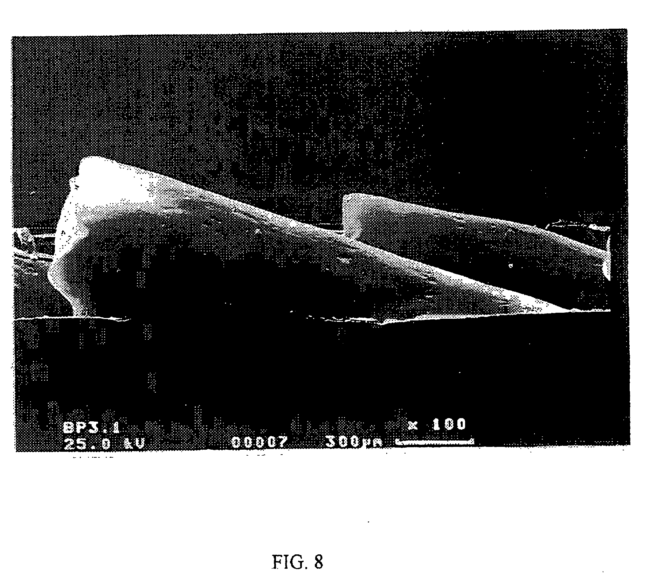

Die Figuren 4 bis 8 zeigen REM-Aufnahmen (Rasterlelektronenmikroskop-Aufnahmen) eines bevorzugten erfindungsgemäßen Films bei Betrachtung aus verschiedenen Perspektiven. So zeigt Fig. 4 eine Draufsicht auf die Oberfläche des Films, der die Kapillaren abgewandt sind; Figur 5 eine Draufsicht auf die Oberfläche des Films, der die Kapillaren zugewandt sind; Figur 6 eine Draufsicht auf die Ausgangsöffnungen der Kapillaren des Films; Figur 7 einen (senkrechten) Schnitt durch den Film; und Figur 8 eine Vergrößerung von Figur 7, und zwar eine 100fache Vergrößerung des Films, während Fig. 7 ebenso wie Fig. 4 bis 6 jeweils eine 40fache Vergrößerung des Films zeigen.

**Beispiel**

Auf einer Anlage, wie in Fig. 2 schematisch dargestellt, wurde eine Ausgangsfolienbahn aus 95 Gewichtsteilen LDPE (Stamylan 2404 der Fa. DSM) und 5 Gewichtsteilen Titandioxid-Batch (des Typs RB6AE der Fa. Novachrome) mit einer Massetemperatur von 270°C einer Unterdruck-Perforierungsvorrichtung zugeführt, wobei der perforierte Zylinder runde Bohrungen unter einem Neigungswinkel β (vgl. Fig. 3) von 70° hatte, die konisch von einem Durchmesser von 0,5 mm für die Eingangsöffnungen der Kapillaren auf einen Durchmesser von 0,3 mm für die Ausgangsöffnungen der Kapillaren zuliefen. Die Anzahl der Bohrungen pro $cm^2$ Zylinderoberfläche betrug 50. Die perforierte Folie, die auch in Fig. 4 bis 8 dargestellt ist, hatte ein Flächengewicht von 25,5 $g/m^2$ und eine Luftdurchlässigkeit von 47 $m^3/m^2 \cdot min$ bei Luftdurchgang von dem der Filmoberfläche zugewandten Ende zu dem der Filmoberfläche abgewandten Ende. Der Luftdurchgang in Gegenrichtung, d.h. durch die Kapillaren von ihren Ausgangsöffnungen zu ihren Eingangsöffnungen, betrug 34 $m^3/m^2 \cdot min$. Die Messung der Luftdurchlässigkeit erfolgte nach DIN 53887 mit einem Meßgerät des Typs TEXTEST FX 3300-20 jedoch bei einem eingestellten Prüfdruck von 125 Pa und einer Meßfläche von 20 $cm^2$.

Die gemäß dem vorgehend bereits beschriebenen Verfahren zur Bestimmung der Wasserdampfdurchlässigkeit (MVTR) gemessene Wasserdampfdurchlässigkeit (MVTR) betrug 7000 $g/m^2 \cdot 24h$ von dem der Filmoberfläche zugewandten Ende zu dem der Filmoberfläche abgewandten Ende.

**Patentansprüche**

1. Perforierter Film aus Polymermaterial, wobei die Perforationen als Kapillaren ausgebildet sind, die sich aus einer Oberflache des Films (7) heraus nicht-vertikal erstrecken und eine Mindestlange aufweisen, bei der bei Draufsicht auf die Oberfläche des Films (7) kein Durchblick durch den Film (7) moglich ist, **dadurch gekennzeichnet, daß** die Kapillaren ebene Wande aufweisen.

2. Film nach Anspruch 1, **dadurch gekennzeichnet, daß** sich die Kapillaren unter einem Winkel von 15 bis 80° zur Vertikalen zu der Oberfläche des Films (7) erstrecken.

3. Film nach Anspruch 1 oder 2, **dadurch gekennzeichnet, daß** die ebenen Wande der Kapillaren zueinander parallel verlaufen.

4. Film nach Anspruch 1 oder 2, **dadurch gekennzeichnet, daß** die ebenen Wände der Kapillaren ausgehend von den Öffnungen der Kapillaren auf dem der Filmoberflache zugewandten Ende, den Eingangsöffnungen der Kapillaren, in Richtung auf die Öffnungen der Kapillaren auf dem der Filmoberfläche abgewandten Ende, den Ausgangsöffnungen der Kapillaren, konisch zulaufen.

5. Film nach einem der vorhergehenden Ansprüche, **dadurch gekennzeichnet, daß** die Öffnungen der Kapillaren auf dem der Filmoberfläche zugewandten und/oder abgewandten Ende rund oder oval sind.

6. Film nach einem der vorhergehenden Ansprüche, **dadurch gekennzeichnet, daß** die Öffnungen der Kapillaren auf dem der Filmoberfläche abgewandten Ende , den Ausgangsöffnungen der Kapillaren, rund sind und einen mittleren Durchmesser von 0,1 bis 1 mm haben.

7. Film nach einem der vorhergehenden Ansprüche, **dadurch gekennzeichnet, daß** der Richtungswinkel der Kapillaren in Maschinenrichtung bei der Herstellung des Films (7) verlauft.

8. Film nach einem der vorhergehenden Ansprüche, **dadurch gekennzeichnet, daß** die offene Fläche des Films (7) 4 bis 35 %, bezogen auf die Gesamtoberflache des Films (7), beträgt.

9. Film nach einem der vorhergehenden Ansprüche, **dadurch gekennzeichnet, daß** es sich bei dem Polymermaterial um LDPE, MDPE, LLDPE, Polypropylen oder ein Gemisch davon handelt

10. Film nach einem der Anspruche 1 bis 8, **dadurch gekennzeichnet, daß** es sich bei dem Polymermaterial um einen biologisch abbaubaren Stoff handelt.

11. Film nach einem der vorhergehenden Ansprüche, **dadurch gekennzeichnet, daß** das Polymermaterial ein oberflächenaktives oder hydrophobes Additiv enthält.

12. Verfahren zur Herstellung eines perforierten Films nach einem der vorhergehenden Ansprüche, wobei ein Ausgangsfilm (2) im schmelzflüssigen Zustand einer Unterdruck-Perforierungsvorrichtung zugeführt wird, die eine Unterdruckvorrichtung (4) und einen Zylinder (3) oder ein Band mit schräg verlaufenden Bohrungen aufweist, wodurch die Polymerschmelze in Richtung des Unterdrucks in die Bohrungen gesaugt wird und die Kapillaren unter Erkaltung des Films ausbildet, **dadurch gekennzeichnet, daß** die schräg verlaufenden Bohrungen des Zylinders (3) oder des Bandes ein ebenes Oberflächenprofil aufweisen.

13. Verfahren nach Anspruch 12, **dadurch gekennzeichnet, daß** ein Zylinder (3) mit einer Wandstärke oder ein Band mit einer Dicke von 0,3 bis 2,0 mm verwendet wird

14. Verfahren nach Anspruch 12 oder 13, **dadurch gekennzeichnet, daß** ein Zylinder (3) oder ein Band verwendet wird, dessen Bohrungen unter einem Winkel von 15 bis 80° zur Vertikalen zur Zylinder- oder Bandoberfläche angeordnet sind.

15. Verfahren nach einem der Ansprüche 12 bis 14, **dadurch gekennzeichnet, daß** ein Zylinder (3) oder ein Band aus einem einlagigen Blech verwendet wird.

**Claims**

1. Perforated film made of polymer material, wherein the perforations are formed as capillaries extending out of the surface of a film (7) in non-vertical direction and comprising a minimum length that prevents viewing through the film (7) as seen from the top view of the surface of the film (7), **characterized in that** the capillaries comprise flat walls.

2. Film according to Claim 1, **characterized in that** the capillaries extend at an angle ranging from 15 to 80 degrees in relation to the perpendicular to the surface of the film (7).

3. Film according to Claim 1 or 2, **characterized in that** the flat walls of the capillaries extend in parallel to each other.

4. Film according to Claim 1 or 2, **characterized in that** the flat walls of the capillaries, when starting at the openings of the capillaries at the end facing towards the film surface, that are the input openings of the capillaries, extend conically in the direction towards the openings of the capillaries at the end facing away from the film surface, that are the output openings of the capillaries.

5. Film according to anyone of the preceding claims, **characterized in that** the openings of the capillaries at the end facing towards and/or away from the film surface are round or oval openings.

6. Film according to anyone of the preceding claims, **characterized in that** the openings of the capillaries at the end facing away from the film surface, that are the output openings of the capillaries, are round in shape and have a mean diameter ranging from 0.1 to 1 mm.

7. Film according to anyone of the preceding claims, **characterized in that** the directional angle of the capiallaries extends in machine direction during production of the film (7).

8. Film according to anyone of the preceding claims, **characterized in that** the open area of the film (7) is 4 to 35 percent, in relation to the total surface of the film (7).

9. Film according to anyone of the preceding claims, **characterized in that** the polymer material is LDPE, MDPE, LLDPE, polypropylene, or a mixture thereof.

10. Film according to anyone of Claims 1 through 8, **characterized in that** the polymer material is a biodegradable substance.

11. Film according to anyone of the preceding claims, **characterized in that** the polymer material contains a surface-active or hydrophobic additive.

12. Method for the production of a perforated film according to anyone of the preceding claims, wherein an initial film (2) is fed to a vacuum perforation apparatus in molten state, said vacuum perforation apparatus comprising a cylinder (3) or a strip with holes extending at a slanted angle, whereby the polymer melt is sucked into the holes in the direction of the vacuum pressure and forms the capillaries while the film is cooled down, **characterized in that** the holes of the cylinder (3) or the strip that extend at a slanted angle comprise a flat surface profile.

13. Method according to Claim 12, **characterized in that** use is made of a cylinder (3) with a wall thickness or a strip with a thickness ranging from 0.3 to 2.0 mm.

14. Method according to Claim 12 or 13, **characterized in that** use is made of a cylinder (3) or a strip the holes of which are arranged at an angle ranging from 15 to 80 degrees in relation to the perpendicular to the surface of said cylinder or strip.

15. Method according to anyone of Claims 12 through 14, **characterized in that** use is made of a cylinder (3) or a strip that is made of a single-layer sheet.

**EP 1 131 026 B1**

**Revendications**

1. Film perforé en matériau polymère, les perforations étant conçues sous la forme de capillaires, s'étendant de façon non verticale hors d'une surface du film (7) et présentant une longueur minimale, avec laquelle, en vue par le dessus sur la surface du film (7) aucune vue à travers le film (7) n'est possible, **caractérisé en ce que** les capillaires sont munis de parois planes.

2. Film selon la revendication 1, **caractérisé en ce que** les capillaires s'étendent à la verticale par rapport à la surface du film (7) sous un angle compris entre 15 et 80 °.

3. Film selon l'une quelconque des revendications 1 ou 2, **caractérisé en ce que** les parois planes des capillaires s'étendent à la parallèle les unes par rapport aux autres.

4. Film selon l'une quelconque des revendications 1 ou 2, **caractérisé en ce qu'**à partir des orifices des capillaires sur l'extrémité dirigée vers la surface du film, les orifices d'entrée des capillaires, les parois planes des capillaires s'étendent de façon conique en direction des orifices des capillaires sur l'extrémité opposée à la surface du film, les orifices de sortie des capillaires.

5. Film selon l'une quelconque des revendications précédentes, **caractérisé en ce que** sur l'extrémité dirigée vers et/ou opposée à la surface du film, les orifices des capillaires sont ronds ou ovales.

6. Film selon l'une quelconque des revendications précédentes, **caractérisé en ce que** les orifices des capillaires sur l'extrémité opposée à la surface du film, les orifices de sortie des capillaires, sont ronds et qu'ils présentent un diamètre compris entre 0,1 et 1 mm.

7. Film selon l'une quelconque des revendications précédentes, **caractérisé en ce que** l'angle de direction des capillaires s'étend en direction de la machine, lors de la fabrication du film (7).

8. Film selon l'une quelconque des revendications précédentes, **caractérisé en ce que** la surface ouverte du film (7) est comprise entre 4 et 35 % de la surface totale du film (7).

9. Film selon l'une quelconque des revendications précédentes, **caractérisé en ce que** le matériau polymère est du LDPE, du MDPE, du LLDPE, du polypropylène ou un mélange de ces derniers.

10. Film selon l'une quelconque des revendications précédentes, **caractérisé en ce que** le matériau polymère est une substance biodégradable.

11. Film selon l'une quelconque des revendications précédentes, **caractérisé en ce que** le matériau polymère contient un additif tensioactif ou hydrophobe.

12. Procédé de fabrication d'un film perforé selon l'une quelconque des revendications précédentes, un film d'origine (2) en fusion étant alimenté vers un dispositif de perforation sous dépression, présentant un cylindre (3) et un dispositif de dépression (4) ou une bande avec des trous s'étendant en oblique, le polymère en fusion étant aspiré de ce fait dans les trous, en direction de la dépression et formant les capillaires lorsque le film est refroidi, **caractérisé en ce que** les trous du cylindre (13) ou de la bande qui s'étendent en oblique ont un profil de surface plane.

13. Procédé selon la revendication 12, **caractérisé en ce qu'**on utilise un cylindre (3) avec une épaisseur de paroi ou une bande d'une épaisseur comprise entre 0,3 et 2,0 mm.

14. Procédé selon l'une quelconque des revendications 12 ou 13, **caractérisé en ce qu'**on utilise un cylindre (3) ou une bande dont les trous sont disposés à la verticale de la surface du cylindre ou de la bande, sous un angle compris entre 15 et 80°.

15. Procédé selon l'une quelconque des revendications 12 à 14, **caractérisé en ce qu'**on utilise un cylindre (3) ou une bande en une tôle monocouche.

FIG. 1

FIG. 2

FIG. 3

FIG. 4

FIG. 5

FIG. 6

FIG. 7

FIG. 8